# EUROPEAN PATENT APPLICATION

(11) **EP 4 845 004 A1**
(43) Date of publication of application: **25.11.2026**
(21) Application number: 25177974.0
(22) Date of filing: 21.05.2025
(51) Int. Cl.: H02M 1/00, H02M 3/335, H02M 7/483, H02M 1/42

(54) **CAPACITOR-BALANCING CIRCUIT, CONVERTER APPARATUS, AND METHOD OF OPERATING A CAPACITOR-BALANCING CIRCUIT**

(71) Applicant: Delta Electronics (Thailand) Public Co., Ltd., Samutprakarn 10280 (TH)
(72) Inventor: KRUMPHOLZ, Christian, 79346 Endingen (DE)
(74) Representative: Hoefer & Partner Patentanwälte mbB

(57) **Abstract**

The invention concerns a capacitor-balancing circuit (1) configured to balance voltages and/or leakage currents of a connectable capacitor module (100) comprising multiple series-connected capacitors (101-103), especially DC-link capacitors, the capacitor-balancing circuit (1) comprising: multiple bidirectional flyback-converters (2-4); and a control unit (50) configured to control the flyback-converters (2-4); wherein the flyback-converters (2-4) respectively comprise a transformer (5) defining a primary side (5.1) and a secondary side (5.2) of the flyback-converters (2-4); the primary sides (5.1) of the flyback-converters (2-4) are connected in series and comprise an input connection (6) of the capacitor-balancing circuit (1) configured to be connectable to the capacitor module (100); the secondary sides (5.2) of the flyback-converters (2-4) are connected in parallel and comprise an output connection (7) of the capacitor-balancing circuit (1); and the control unit (50) is configured to drive the flyback-converters (2-4) to output a target power of target voltage and/or target current to the output connection (7) and to balance voltages and/or leakage currents between multiple series-connected capacitors (101-103) in a connected state of the capacitor module (100).

## Description

### Field of the Invention

The invention concerns a capacitor-balancing circuit for balancing voltages and/or leakage currents of connectable multiple series-connected capacitors. The invention also concerns a converter apparatus comprising the capacitor-balancing circuit, and a method of operating a capacitor-balancing circuit.

### Background of the Invention

Conventionally, capacitor-balancing circuits for balancing voltages and/or leakage currents between multiple series-connected capacitors, especially DC-link capacitors, are known.

Especially in converter circuits comprising a boost power factor correction circuit (PFC) and a DC/DC converter with three-phase input, multiple series-connected capacitors are connected as DC-link capacitors between the boost PFC and the DC/DC converter circuit. In such known examples, voltage balancing is necessary due to capacitor leakage current differences between the series-connected capacitors.

Prior art strategies for voltage balancing focus on "lossy balancing" by adding balancing resistors and transient voltage suppresser (TSV) diodes or using an active circuit, especially a linear regulator. These "lossy" balancing techniques however suffer from a high power loss, as asymmetry of the leakage currents must be dissipated via lossy balancing.

On the other hand, there are also known so-called "lossless" direct balancing solutions which balance the capacitor voltages by using a switch-mode converter. Therein, power is transferred from one capacitor directly to the other. The drawback of such solutions is that additional circuitry is required, which adds costs and consumes real estate in printed circuit board applications.

Other examples include so-called "lossless" indirect balancing, in which the power train, especially a DC/DC stage, is used to balance the capacitor voltages. A known concept is using two LLC converters of the DC/DC stage which are connected directly to the series-connected capacitors. These solutions, however, require comparably complex control strategies that are required for the LLC converters to balance the capacitor voltages. Furthermore, these solutions are not capable of balancing at zero load due to the unidirectional characteristics of the LLC converters. Furthermore, the operation of both converters in such applications at the same switching frequency with additionally controllable phase shift is also not possible.

From WO 2020/030409 A1, a voltage converter as a step-down converter is known which comprises input capacitors as a capacitor bank.

From IN411296, a bidirectional switch circuit and an electric power converter employing the bidirectional switch circuit are known. Further, from US10103638 B1, a single flyback-converter with capacitor module and switching module comprising one transformer and one secondary side winding is known.

The known solutions have the following drawbacks. For one, lossy balancing techniques employing for instance balancing resistors suffer from a high power loss. Known directed balancing techniques require additional circuitry, adding costs and increasing the size of the devices. The use of LLC converters to balance capacitor voltages further has the drawback that balancing is not possible at zero load. Furthermore, the operation of both converters in such cases is highly complex and does not allow operating the converters at the same switching frequency with additionally controllable phase shifts.

### Summary

It is an object of the present invention to overcome these deficiencies. In particular, it is an object of the present invention to provide a capacitor-balancing circuit and a converter apparatus as well as a method of operating a capacitor-balancing circuit which can provide lossless voltage balancing, can provide voltage balancing also at zero load, can reduce output ripple, and can be operated in a simplified and energy efficient manner.

In particular, the solution of at least one of these objects is achieved by the capacitor-balancing circuit according to claim 1. The capacitor-balancing circuit is configured to balance voltages and/or leakage currents of a connectable capacitor module comprising multiple series-connected capacitors, especially DC-link capacitors. The capacitor-balancing circuit comprises multiple bidirectional flyback-converters and a control unit configured to control the flyback-converters. Therein, the flyback-converters respectively comprise a transformer defining a primary side and a secondary side of the flyback-converters. The primary sides of the flyback-converters are connected in series and comprise an input connection for the capacitor-balancing circuit configured to be connectable to the capacitor module. The secondary sides of the flyback-converters are connected in parallel and comprise an output connection for the capacitor-balancing circuit. Furthermore, the control unit is configured to drive the flyback-converters to output a target power of target voltage and/or target current to the output connection and to balance voltages and/or leakage currents between multiple series-connected capacitors of the capacitor module in a connected sate.

By providing multiple bidirectional flyback-converters, the capacitor-balancing circuit of the present invention can balance voltages and/or leakage currents between the multiple series-connected capacitors (in the following also referred to as "DC-link capacitors", although not strictly limited thereto, or merely "input capacitors" or "capacitors") via the primary and the secondary sides of the flyback-converters. Further, by using the primary and/or the secondary sides, the capacitor-balancing circuit can distribute a balancing voltage either equally to the DC-link capacitors or to each capacitor individually. Furthermore, for supplying the target voltage and simultaneously balancing the DC-link capacitors, the capacitor-balancing circuit of the present invention has a higher flexibility with regard to switching frequency and possible additionally controllable phase shift between the converters.

The present invention also preferably provides the following advantages:
- Balancing multiple series connected capacitors at any load condition;
- Simple flyback transformer design that leads to a highly optimized transformer with a minimized leakage inductivity ending up in a very high efficiency at all modes of operation (continuous, discontinuous, transition and hysteresis);
- Adjustable phase shift between all stages (from zero degree to 360°/(number of stages)) that may be used to reduce the output ripple or reduce the number of output capacitors, in addition or alternatively free selection of the switching frequencies of each flyback stage; and
- Individual voltage setting of each series-connected capacitor.

The capacitor-balancing circuit as described above is principally connectable to the capacitor module comprising the multiple series-connected capacitors. Thereby, the capacitor-balancing circuit of the present invention can be added to a high variety of existing circuits, especially for example PFC circuits with stacked DC-link capacitors at their output. In some preferable applications, as will also be described below, the capacitor-balancing circuit of the present invention is preferably used as a DC/DC converter.

The multiple bidirectional flyback-converters respectively comprise a transformer defining their primary side and their secondary side. In other words, the multiple bidirectional flyback-converters are separate converters, each comprising a transformer defining a primary side and a secondary side. Each of the flyback-converters is, with their primary side, preferably connected in parallel to one of the multiple DC-link capacitors. In other words, each of the flyback-converters is connected in parallel between a mid-point connection of two DC-link capacitors and one of a positive or negative rail, or between two mid-point connections of at least three DC-link capacitors. Particularly preferably, the number of DC-link capacitors corresponds to the number of flyback-converters or is a natural (non-zero) number or positive integer multiple thereof (for example, two DC-link capacitors in series with one another for each flyback-converter and connected in parallel to said each flyback-converter).

The parallel-connected secondary sides of the flyback-converters comprise the output connection for the capacitor-balancing circuit. In the sense herein, the parallel-connected secondary sides of the flyback-converters are also connected in parallel to the output connection. Preferably, the secondary sides of the flyback-converters are connected to the same one or more output capacitors. In other words, the flyback-converters work on the same output voltage.

Preferably, the input connection and/or the output connection is/are outside terminals of the capacitor-balancing circuit.

Preferably, the control unit is configured to distribute voltages between the multiple-series connected capacitors equally or individually as predetermined distribution values. Due to the flexibility of using multiple bidirectional flyback-converters, especially via their multiple secondary sides, the capacitor-balancing circuit can selectively or individually provide a balancing voltage to each of the DC-link capacitors individually especially by using both the primary and secondary sides for voltage balancing and/or leakage current re-direction.

Preferably, the control unit is configured to balance voltages and/or leakage currents between the series-connected capacitors at least in an operation mode of no target power, especially no load (i.e. indefinite resistance). Due to the capacitor-balancing circuit comprising bidirectional flyback-converters, energy can be transferred via the flyback-converters between the capacitors via the secondary windings of the flyback-converters.

Preferably, the control unit is configured to at least temporarily drive at least one flyback-converter to produce a reverse current, especially from a secondary side to a primary side of the at least one flyback-converter, opposite a forward current, especially from the primary side of the secondary side, of at least one other flyback converter. Thereby, the capacitor-balancing circuit allows for balancing voltages and/or leakage current also at zero load and furthermore provides voltage soft-switching of the converters.

Using the forward current and the reverse current operation, the control unit is preferably configured to balance the voltages and/or leakage current via the secondary sides of the flyback-converters, particularly as a loop from the primary side of one flyback-converter to its secondary side and then via the secondary side of one other flyback-converter to the primary side of that other flyback-converter (or distributed over more than two flyback-converters). This greatly increases the flexibility of the control and circuit, especially with regard to distributing the voltages between the capacitors.

It is to be noted that the foregoing and the following modes of operation and cases are preferably combinable, wherein the control unit carries out different modes operation over time, especially depending on the respective case.

Preferably, a difference of the reverse current and the forward current, especially an addition of the absolute values, supplied by the flyback-converters, especially averaged over time, is a value substantially equal to a leakage current of one or a net leakage current of multiple of the multiple series-connected capacitors. In other words, the capacitor-balancing circuit preferably drives at least one flyback-converter to produce a reverse current and at least one flyback-converter to produce a forward current so as to balance voltages and/or leakage currents between the multiple series-connected capacitors. This is preferably performed at zero load operation, or performed during a normal operation of providing target power to the output.

Preferably, in the aforementioned example of the addition of the forward current and the reverse current providing the leakage current while providing non-zero target power, one or more further flyback-converters (i.e. in total for example at least three flyback-converters) can be further controlled to provide balancing currents and target power.

In a preferable example of the capacitor balancing circuit comprising a total of two flyback-converters, each comprising individual primary side winding, transformer and secondary winding, and being connected to a capacitor module comprising two series-connected capacitors, in a case of one of the capacitors producing leakage current, the control unit is configured to control a first flyback-converter to produce the forward current and a second flyback-converter to produce the reverse current. Thereby, the first flyback-converter transfers leakage current to the secondary side and the second flyback-converter transfers the leakage current from the secondary side to the primary side, which therefore transfers leakage current from one capacitor to the other.

Preferably, in an operation mode of no target power, an addition of absolute values averaged over time of the forward current of the forward current of the first flyback-converter and the reverse current of the second flyback-converter is substantially equal to the leakage current. Thereby, even at no target power, the capacitor-balancing circuit achieves balancing voltages and/or leakage currents between the capacitors by using the secondary sides of the flyback-converters.

Preferably, particularly in foregoing example of the forward and reverse current on average equal to the leakage current, the transformer inductivities of the first flyback-converter and the second flyback-converter are substantially equal, and absolute values averaged over time of the forward current and of the reverse current are respectively substantially one-half of the leakage current. In particular, in preferable examples of non-equal transformer inductivities, the aforementioned average absolute values, instead of one-half, are in a relationship according to a relationship of non-equal transformer inductivities, which are preferably measured and/or predetermined.

In particular, the average current flowing through the first flyback-converter on the primary side and the secondary side is respectively positive, while the average current of the primary side and the secondary side of the second flyback-converter is negative, such that the currents of the first flyback converter and the second flyback-converter are balanced against each other.

Further, in the example of the capacitor-balancing circuit comprising a total of two flyback-converters and connected to two series-connected capacitors, in a case of both capacitors respectively producing leakage current, the control unit is configured to control each of the flyback-converters to respectively produce alternating forward and reverse currents.

Preferably therein, in an operation mode of no target power, a forward current phase of forward current and a negative current phase of negative current with regard to one of the flyback-converters are symmetrical. In other words, the forward current of one flyback-converter is symmetrical to the negative current of that same flyback-converter. In particular, the average current of each flyback-converter balances itself out over time.

Further preferably, with transformer inductivities of the converters being non-equal, the currents of the flyback-converters differ from one another. In other words, preferably, while the current of one flyback-converter is symmetrical with respect to itself, this being the case for both converters, the currents of the converters are not symmetrical between the different converters. In yet other words, for example the forward current of one of the converters is not symmetrical to the reverse current of the other. In a further preferable case in which transformer inductivities of each of the flyback-converters are equal, the currents of one converter are preferably symmetrical to the currents of the other converter.

In preferable embodiments, the control unit is configured to control the flyback-converters with, at least temporarily, differing respective duty cycles. Therein, the control unit is especially configured to regulate the common output voltage or common output current of the flyback-converters to the target power. Furthermore, the control unit is especially configured to regulate the input voltages of the flyback-converters to the same or a predetermined value. By controlling the flyback-converters with individual duty cycles, the capacitor-balancing circuit can simultaneously balance the DC-link capacitors, supply the same input voltages to the flyback-converters, and provide the target power for the output of the capacitor-balancing circuit.

Preferably, the control unit is further configured to control the switching frequency of the flyback-converters as a function of both the input voltage and the load.

Further preferably, the control unit is configured to perform synchronized and interleaved control of the flyback-converters at a predetermined phase shift. For example, for two flyback-converters, the control unit controls the flyback-converters with a phase shift of 180°, and for the example of three flyback-converters with a phase shift of for example 120°, etc.

In some preferable examples, the control unit is configured to control the flyback-converters with equal, especially fixed, switching frequency and especially equal duty cycles.

Preferably, the control unit is configured to control the duty cycles of the flyback-converters based on the target power of the flyback-converters, especially the output voltage or the output current of the flyback-converters. Therein, the capacitor-balancing circuit achieves a natural balancing of the voltages and/or leakage currents between the multiple series-connected capacitors, since a lower flyback-converter input voltage due to voltage imbalance leads to a lower primary side current thereof, and thus to less stored energy in the transformer of that flyback-converter. This further leads to a reduced power transfer and less current being drawn from the capacitor with the lower voltage. This provides a cost-effective solution for balancing voltages and/or leakage currents, for example for power supplies with a lower power level fed by a three-phase input.

Preferably, the control unit is configured to perform a voltage soft-switching operation by driving at least one flyback-converter to produce the reverse current. Therein, while providing target power, especially a non-zero load, the negative current produced by one or more of the flyback-converters discharges any switch capacity at the primary side thereof, which leads to a voltage soft-switching. Preferably, with interleaved control of the flyback-converters, the reverse current produced by one flyback-converter overlaps in time with the forward current produced by the other flyback-converter.

In preferable embodiments, the flyback-converters respectively comprise at least one switch on the primary side and a synchronous rectifier on the secondary side. Therein, the control unit is configured to drive the flyback-converters by controlling switching of the at least one switch and the rectifier of each flyback-converter. In particular, each of the multiple bidirectional flyback-converters comprises one synchronous rectifier on the secondary side. In other words, the capacitor-balancing circuit preferably comprises multiple synchronous rectifiers on the secondary side, especially equal to the number of bidirectional flyback-converters.

The switches and/or the synchronous rectifiers are preferably FETs and/or MOSFETs. Preferably, the switches and/or the synchronous rectifiers comprise body diodes. Alternatively or in addition thereto, the capacitor-balancing circuit comprises at least one freewheeling- or flyback-diode.

Preferably, the secondary sides of the flyback-converters are connected in parallel to each other and in particular preferably in parallel to the output connection. In other words, the secondary sides of the flyback-converters are connected in parallel with each other. Furthermore, preferably, the secondary sides of the flyback-converters are connected in parallel to one another and to the same output capacitor, especially to the same output capacitor bank comprising multiple series-connected output capacitors.

Preferably, the number of flyback-converters corresponds to the number of series-connected capacitors, and is especially two or three or more. For example, the capacitor module comprises two series-connected capacitors and the capacitor-balancing circuit comprises two bidirectional flyback-converters, each comprising a primary winding, a transformer, and a secondary winding, wherein the primary sides of the flyback-converters are connected in series with one another and in parallel to the DC-link capacitors. The secondary windings of the two bidirectional flyback-converters are connected in parallel to one another.

In an exemplary embodiment of the capacitor-balancing circuit being configured to balance voltages and/or leakage currents of a capacitor module comprising three series-connected capacitors, the capacitor-balancing circuit comprises three bidirectional flyback-converters, each comprising a primary winding, a transformer, and a secondary winding. Therein, a first flyback-converter is connected between a positive rail of input voltage and a first midpoint between a first and second DC-link capacitor. A second flyback-converter is connected between the first midpoint and a second midpoint between the second capacitor and a third capacitor. A third flyback-converter is connected between the second midpoint and a negative rail of input voltage. The secondary sides of all three flyback-converters are connected in parallel to the output connection, in particular to the output capacitor or output capacitor bank.

The present invention also concerns a converter apparatus comprising the capacitor-balancing circuit according to anyone of the foregoing examples and explanations. Preferably, the converter apparatus further comprises a boost PFC unit or a passive PFC unit which is connected with its output to the capacitor module comprising the multiple series-connected capacitors, especially the DC-link capacitors. In other words, in the present converter apparatus, the capacitor module is connected in parallel between the boost PFC unit or passive PFC unit and the capacitor-balancing circuit.

Preferably, the boost PFC unit or the passive PFC unit of the converter apparatus does not comprise a bulk capacitor voltage regulator for voltage regulation of the DC-link capacitors. Herein, preferably, the capacitor-balancing circuit provides regulation of the input voltages of the multiple bidirectional flyback-converters.

The present invention also concerns a method of operating a capacitor-balancing circuit according to anyone of the foregoing examples and explanations. In particular, the foregoing examples and explanations pertaining to configuration schemes of the control unit, particularly with regard to control of the multiple bidirectional flyback-converters, are to be understood as method steps of the method of operating the capacitor-balancing circuit.

Preferably, the method comprises a hysteresis mode for every flyback-converter an operation method of the capacitor-balancing circuit. The method preferably, in addition or alternatively to the hysteresis mode, comprise peak current mode with constant and/or variable switching frequency, boundary mode with variable switching frequency, continuous mode with constant and/or variable switching frequency and/or discontinuous mode with constant and/or variable switching frequency. Preferably, "and" combinations of the above are to be understood in the sense of controlling one flyback-converter with one mode, while controlling one or more other flyback-converter(s) with (respectively) another mode and/or to be understood in the sense of controlling all flyback-converters with different modes over the course of time, i.e. subsequently. This understanding preferably also pertains to the formulation "in addition or alternatively" with regard to control methods and modes of operation.

In the following, the hysteresis mode control method is explained.

Basic regulation concept for each flyback-converter:
The peak current at the primary side is measured. The valley current at the secondary side is measured. The valley current is preferably set to a negative value to enable a voltage soft-switching at the primary side switch. The output voltage and or the output current is measured.

The output voltage is compared with a voltage setpoint. This difference is processed by a regulator of the control unit that influences the peak current at the primary side. The higher the power demand, the higher the peak current. The switching frequency is, in this mode, a result of the output voltage, the output current, the input voltage and the transformer inductivity.

In an operation method for two or more flyback-converters, in addition or alternatively to the above:
The input voltage of each flyback-converter stage is measured in a first step. Assuming that the input (capacitor) voltages are non-equal, then the values are subtracted in a second step and the difference is processed in a third step, for instance by a bulk voltage regulator of the control unit. The control signal of this regulator, i.e. of the control unit, controls the peak currents of the flyback-converters- in a fourth step.

Preferable frequency synchronization and phase shift, in addition to the above, are as follows:
A phase lock loop (PLL) is used to synchronize all flyback-converters. The valley current of the secondary side is manipulated to achieve the same switching frequency for all flyback-converters.

If an additional phase shift (e.g. 180° for two stages) is preferable, then the switching period of one flyback-converter is measured and the switching cycles of the other flyback-converter(s) is/are started with the delay of the phase shift.

The foregoing examples and explanations are preferably combinable. In particular, the foregoing configuration schemes of the control unit are combinable, especially with respect to different modes of operation of the capacitor-balancing circuit. In other words, preferably, as a method of operation or a configuration scheme of the control unit, a mode of operation is determined and the corresponding method or configuration scheme of the control unit is chosen and carried out.

In some examples, the control unit of the capacitor-balancing circuit comprises an input for receiving values from a voltage or current sensor sensing voltages or currents of each or all series-connected capacitors of the capacitor module. The corresponding sensors are preferably comprised by the capacitor module or are comprised by the capacitor-balancing circuit.

Preferably, the capacitor-balancing circuit and/or the converter apparatus are implemented on a PCB. The control unit is preferably a CPU, GPU, FPGA, SoC, ASIC, etc, and preferably comprises storage means. The method of control and/or the foregoing configuration schemes of the control unit are preferably carried out by the control unit of the capacitor-balancing circuit and/or the converter apparatus, especially as a computer implemented invention.

The foregoing described preferable embodiments and configurations may be combined.

Further details, advantages, and features of the preferred embodiments of the present invention are described in detail with reference to the figures. Therein:

### Brief Description of the Drawings

- Fig. 1: shows a schematic circuit block diagram of a capacitor-balancing circuit according a first embodiment of the present invention;
- Fig. 2: shows a schematic circuit block diagram of a capacitor-balancing circuit according a second embodiment of the present invention;
- Fig. 3: shows a detailed circuit diagram of the capacitor-balancing circuit of the first embodiment;
- Fig. 4: shows a detailed circuit diagram of the capacitor-balancing circuit of a modification of the first embodiment;
- Fig. 5: shows a graph depicting current over time for a first mode of operation of the capacitor-balancing circuit of the present invention;
- Fig. 6: shows a graph depicting current over time for a second mode of operation of the capacitor-balancing circuit of the present invention;
- Fig. 7: shows a graph depicting current over time for a third mode of operation of the capacitor-balancing circuit of the present invention;
- Fig. 8: shows a graph depicting current over time for a fourth mode of operation of the capacitor-balancing circuit of the present invention;
- Figs. 9 to 12: show simulation results of different modes of operation of the capacitor-balancing circuit according to the present invention;
- Fig. 13: shows a schematic block diagram depicting a method of operating the capacitor-balancing circuit according to the present invention; and
- Fig. 14: shows a schematic circuit diagram of a converter apparatus according to the present invention.

### Description of the Embodiments

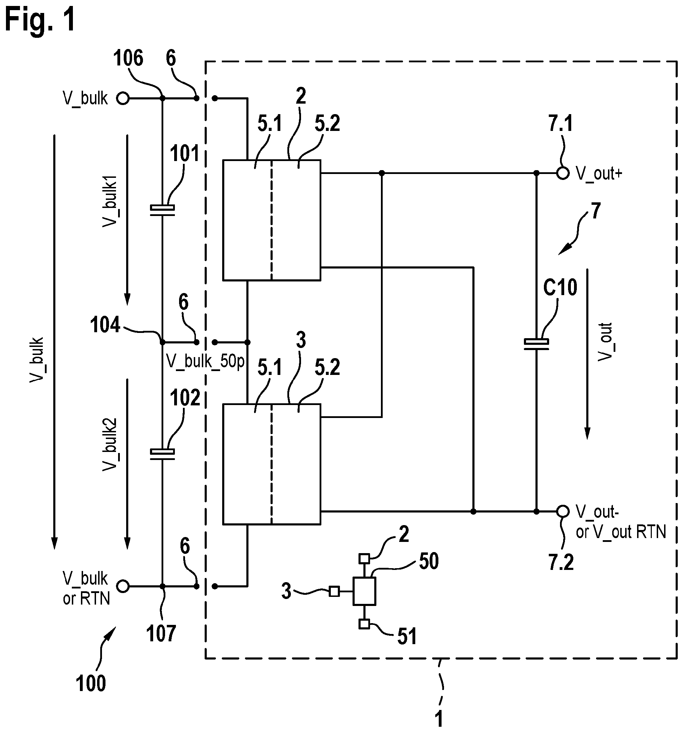

Fig. 1 shows a schematic circuit block diagram of a capacitor-balancing circuit 1 according a first embodiment of the present invention.

The capacitor-balancing circuit 1 of the first embodiment is configured to balance voltages and/or leakage currents of a capacitor module 100 which comprises multiple series-connected capacitors 101, 102. In the present embodiment, the capacitor module 100 comprises two series-connected capacitors 101, 102. The capacitor-balancing circuit 1 of the present embodiment is principally connectable to the capacitor module 100.

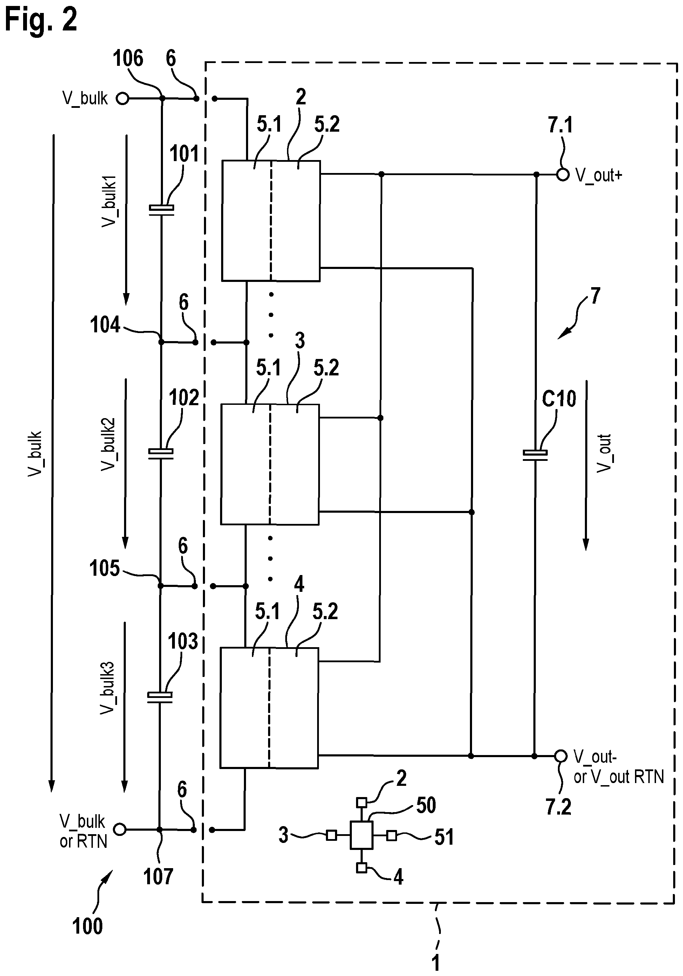

The capacitor-balancing circuit 1 comprises multiple bidirectional flyback converters 2, 3. In the present embodiment, the capacitor-balancing circuit 1 comprises two bidirectional flyback converters 2, 3, but as will be discussed with regard to Fig. 2 is not principally limited thereto. Furthermore, the capacitor-balancing circuit 1 comprises a control unit 50 which is configured to control the flyback converters 2, 3, as will be explained further below.

The flyback converters 2, 3 respectively define a primary side 5.1 and a secondary side 5.2. Hierein, the primary sides 5.1 of the flyback converters 2, 3 comprise an input connection 6 of the capacitor-balancing circuit 1. This input connection 6 is configured to be connectable to the capacitor module 100. In particular, the input connection 6 is configured to be connectable to a positive rail 106 (V_bulk), a negative or ground rail 107 (V_bulk or RTN), and to a midpoint 104 between a first capacitor 101 and a second capacitor 102 of the capacitor module 100.

The secondary sides 5.2 of the flyback converters 2, 3 comprise an output connection 7 of the capacitor-balancing circuit 1. In particular, the output connection 7 comprises a positive rail 7.1 (V_out+) and a negative or ground rail 7.2 (V_out- or V_out_RTN). The output connection 7 is preferably connected to a load, as will be described further below.

The control unit 50 is connected to the flyback converters 2, 3 and is configured to drive the flyback converters 2, 3 so as to output a target power of target voltage and/or targent current to the output connection 7.

In the present invention, the flyback converters 2, 3 are bidirectional. In other words, the flyback converters 2, 3 are respectively configured to be capable of forward operation from primary side 5.1 to secondary side 5.2 and reverse direction from secondary side 5.2 to primary side 5.1. In this regard, it should be noted that the nomenclature for "primary side" and "secondary side" is, especially in the case of bidirectional converters, principally reversible. However, for ease of explanation, the nomenclature in the sense herein will be fixed to the primary side 5.1 referring to the side being connectable to or connected to the capacitor module 100, and the secondary side 5.2 being the side of the converters 2, 3 opposite the primary side 5.1. In other words, when power is transferred from the side of for example the output connection 7 to the side of the input connection 6, the presently chosen nomenclature will nonetheless stay the same.

By providing multiple bidirectional flyback converters 2, 3, the present embodiment achieves a capacitor-balancing circuit 1 which can balance capacitor voltages V_bulk1 and V_bulk2.

Furthermore, the capacitor-balancing circuit 1, as will also be elucidated further below, can distribute voltages equally between the capacitors 101, 102, or set their voltages V_bulk1, V_bulk2 individually. Furthermore, the present embodiment also works at no output load due to the bidirectional construction of the flyback converters 2, 3.

Fig. 2 shows a schematic circuit block diagram of a capacitor-balancing circuit 1 according a second embodiment of the present invention.

In particular, Fig. 2 shows that the capacitor-balancing circuit 1 is not principally limited to comprising two bidirectional flyback converters 2, 3, but can comprise three or more bidirectional flyback converters 2 to 4. In particular, the number of bidirectional flyback converters 2 to 4 is dependent on, especially equal to, a number of series-connected capacitors 101 to 103 of the capacitor module 100. Explicitly shown in Fig. 2 are three bidirectional flyback converters 2, 3, 4, wherein the first bidirectional flyback converter 2 is connected between the positive rail 106 and a first midpoint 104 between a first capacitor 101 and a second capacitor 102. The second bidirectional flyback converter 3 is connected between the first midpoint 104 and a second midpoint 105 between the second capacitor 102 and a third capacitor 103. The third bidirectional flyback converter 4 is connected between the second midpoint 105 and the bottom rail 107. As can be taken from Figs. 1 and 2, each of the bidirectional flyback converters 2 to 4 is respectively connected in parallel with one capacitor 101 to 103, wherein the capacitors 101 to 103 are connected in series with one another, and the conferred bidirectional flyback converters 2, 3, and 4 are also connected in series with one another.

As can be taken from Figs. 1 and 2, the secondary sides 5.2 of the flyback converters 2 to 4 are connected in parallel to the output connection 7. Therein, the secondary sides 5.2 of the flyback converters 2 to 4 are connected with each other in parallel. Furthermore, all of the bidirectional flyback converters 2 to 4 share a common output, namely the output connection 7, 7.1, 7.2.

Furthermore, the secondary sides 5.2 of all bidirectional flyback converters 2 to 4 are connected to a same output capacitor C 10. The output capacitor C10 may comprise or consist of a plurality of series-connected capacitors, for example as a capacitor bank.

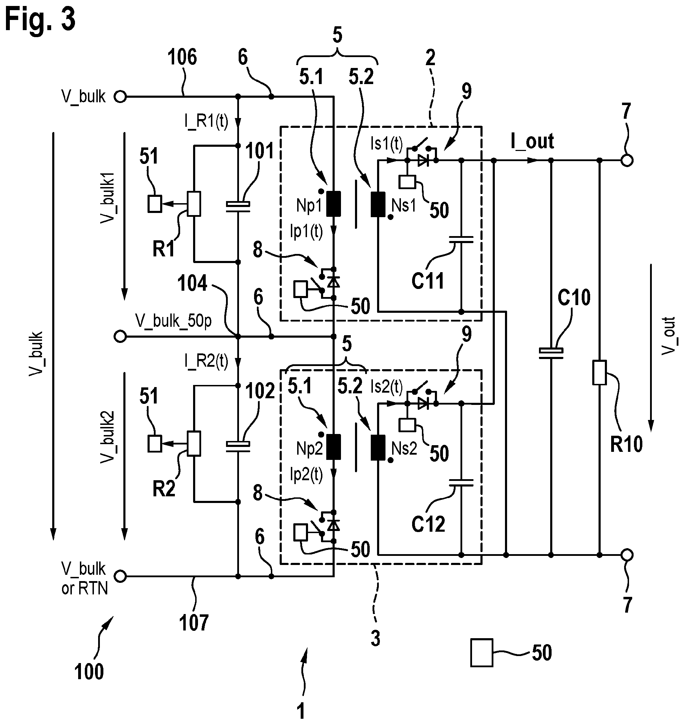

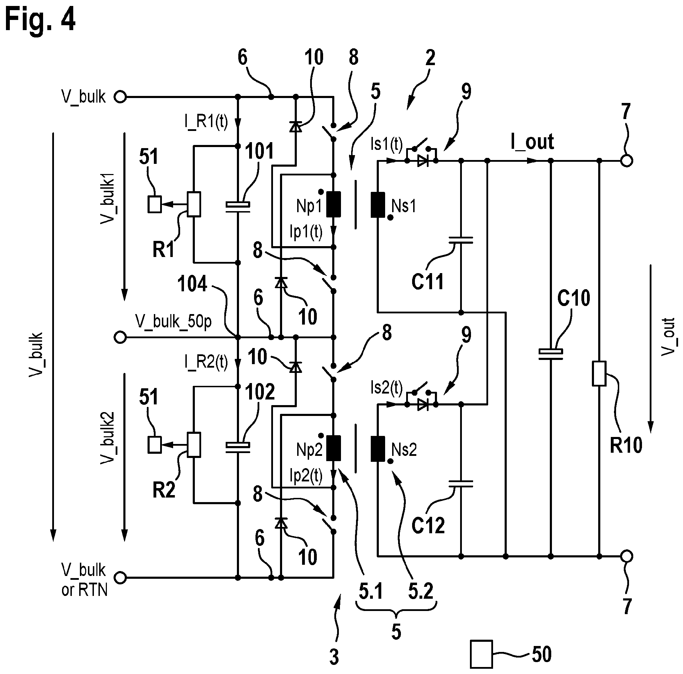

Now, with respect to Figs. 3 and 4, the capacitor-balancing circuit 1 of embodiment will be described with more detail. The embodiments shown in Figs. 3 and 4 are applicable also to the embodiment shown in Fig. 2, wherein the detailed views of especially the bidirectional flyback converters 2, 3 are included in the schematic block diagrams of Fig. 2.

Fig. 3 shows a detailed circuit diagram of the capacitor-balancing circuit 1 of the first embodiment.

In particular, Fig. 3 shows a connected state of the capacitor-balancing circuit 1, i.e. a state in which the input connection 6 is connected to the capacitor module 100. This configured to may also be referred to as a "balancing apparatus" comprising the capacitor-balancing circuit 1 and the capacitor module 100.

In addition, Fig. 3 particularly shows a preferable configured to of each of the bidirectional flyback converters 2, 3, which will in the following be referred to as "first bidirectional flyback converter 2" and "second bidirectional flyback converter 3" or simply as "flyback converter(s)".

Each of the flyback converters 2, 3 comprises a transformer 5. In the present embodiment, as shown in Fig. 3, each flyback converter 2, 3 comprises its own transformer 5. The transformer 5, via its galvanic isolation, defines the primary side 5.1 and the secondary side 5.2 of the respective flyback converter 2, 3. In particular, each transformer 5 comprises a primary winding Np1 and a secondary winding Ns1. Each flyback converter 2, 3 comprises its own transformer 5 with its own set of windings Np1, Ns1.

Furthermore, each flyback converter 2, 3 in the present embodiment comprises an output capacitor C11, C12, especially respectively as a smoothing capacitor C11, C12. These can be preferably omitted, preferably depending on presence or properties of the output capacitor C10.

Furthermore, the secondary sides 5.2 of the flyback converters 2, 3 are connected in parallel with one another, and are connected in common to the output connection 7 and in parallel to the output capacitor C10.

Herein, the capacitor-balancing circuit 1 is also connected to a load which is denoted in Figs. 3 and 4 as a resistor R10.

The capacitor module 100 herein shows exemplary parallel resistors R1, R2, respectively connected in parallel to one capacitor 101, 102. These resistors R1, R2 exemplify a voltage measurement of the respective voltages of the capacitors 101, 102, namely V_bulk1 and V_bulk2, and in particular represent leakage currents of the capacitors 101, 102. Herein, the measured values are input to a sensing input 51 of the control unit 50.

Each of the flyback converters 2, 3 further comprises a primary side switch 8 and a secondary side switch 9. Herein, the secondary side switch 9 is a synchronous rectifier 9. The switches 8, 9 are preferably FETs and/or MOSFETs. As can be taken from Fig. 3, each of the switches 8, 9 comprises a body diode. The switches 8, 9 are connected to the control unit 50, such that the control unit 50 controls the converters 2, 3 by controlling switching of the primary side switch 8 and the synchronous rectifier 9 of each respective converter 2, 3.

Furthermore, as will be used in the following, the currents will be denoted as follows with their positive current direction shown in Figs. 3 and 4.

I_R1(t) and I_R2(t) are possible leakage currents of the series-connected capacitors 101, 102, respectively. In other words, I_R1(t) denotes leakage current of the first capacitor 101, and I_R2(t) denotes leakage current of the second capacitor 102. The currents I_R1(t) and I_R2(t) also represent voltage sensing / measurement networks for control of the capacitor-balancing circuit 1. Ip1(t) and Ip2(t) denote current flowing through the primary sides 5.1 of the transformer 5, i.e. through the primary windings Np1, Np2. The currents Is1(t) and Is2(t) denote the currents flowing through the secondary sides 5.2 of the transformers 5, i.e. through the secondary windings Ns1, Ns2. I_out denotes output current flowing to the output connection 7.

With regard to the voltages V_bulk is the total voltage between positive rail 106 and negative or ground rail 107, V_bulk1 is the voltage of the first capacitor 101 between the top rail 106 and the midpoint 104, V_bulk_50p is the voltage at the midpoint 104 between the capacitors 101, 102, V_bulk 2 is the voltage of the second capacitor 102 between the midpoint 104 and the negative rail 107, and V_out is output voltage to the output connection 7. I_out and V-out together denote the output power.

Fig. 4 shows a modification of the detailed circuit diagram of the capacitor-balancing circuit 1 of the first embodiment. Herein, the capacitor-balancing circuit 1, in particular the flyback converters 2, 3 respectively comprise an additional primary side switch 8, with both primary side switches 8 being in series with the primary side 5.1 of the transformer 5, and additional flyback or freewheeling diodes 10. While the configured to of Fig. 3 is simpler and more cost-effective, the configured to of the modification of Fig. 4 allows a higher variety of available components for the primary side switches 8 and/or the diodes 10.

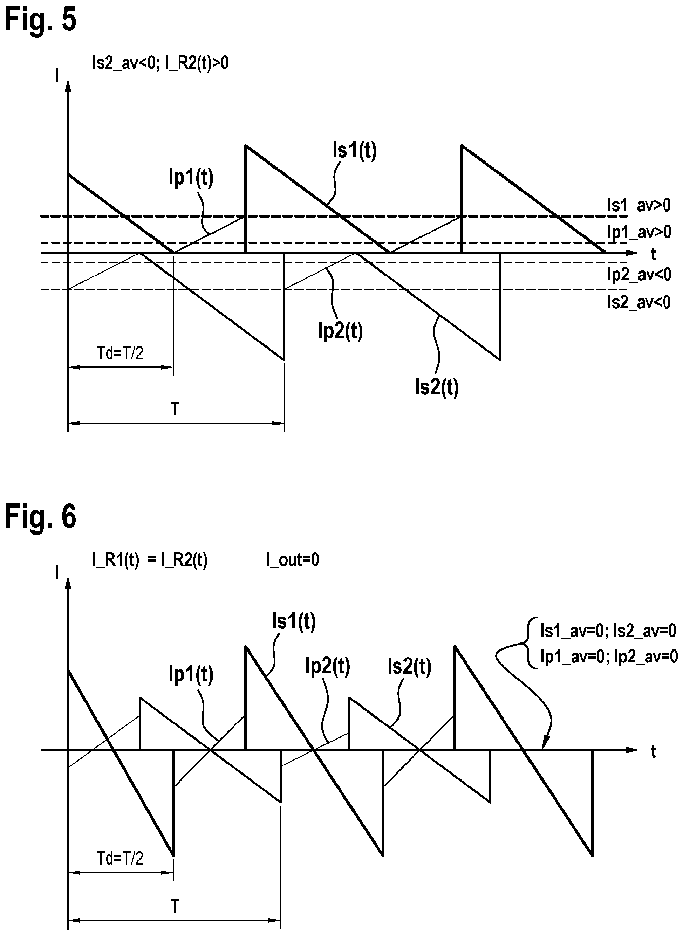

Now, with respect to Figs. 5 to 8, different modes of operation and control of the capacitor-balancing circuit 1 will be discussed.

Fig. 5 shows a first mode of operation. Herein, it is assumed that no leakage current flows through the first capacitor 101, i.e. I_R1(t) = 0, while leakage current flows through the second capacitor 102, i.e. I_R2(t) > 0. Furthermore, in this mode of operation the output load R10 is indefinite, i.e. the output current is zero such that the target power is zero.

According to Kirchhoff, the sum of all positive and negative currents at a node must be zero. If the voltages across first capacitor 101 and second capacitor 102 are constant, then the voltage at node "V_bulk_50p" is also constant and the average currents are constant, too.

Valid equations: ${I}_{R 1 av} + Ip {1}_{av} = {I}_{R 2 av} + Ip {2}_{av} ∧ {I}_{R 1 av} = 0$ (1) Equation 1: Given by Kirchhoff at node "V_bulk_50p" $Ip {1}_{av} = - Ip {2}_{av}$ (2) Equation 2: Given by no output load; the efficiency of all flyback converters is 100% $⇒ Ip {1}_{av} = {I}_{R 2 av} / 2$ (3) Equation 3: Average current at flyback converter #1

As shown in Fig. 5, the synchronous rectifier 9 of each flyback converter 2, 3 allows a negative current direction at the secondary side, i.e. Is2(t) < 0. Herein, the first flyback converter 2, i.e. the flyback converter 2 connected between the positive rail 106 and the midpoint 104, and directly in parallel to the first capacitor 101, is controlled by the control unit 50 to deliver the primary side current Ip1(t) and secondary side current Is1(t), while the second flyback converter 3, i.e. the flyback converter 3 connected to the negative rail 107 and directly in parallel to the second capacitor 102, is controlled by the control unit 50 to deliver the negative currents Ip2(t) and Is2(t). The current Ip2(t), for example, stems from active switching of the primary side switch 8 and from conduction of the body diode thereof. For example, first the body diode conducts, and second the channel of the primary side switch 8 is turned on to save power loss (and to enable a positive current if advantageous or required). As shown for example at the time point Td = T½, the respective initial rises of primary side currents Ip1(t), Ip2(t) denote the switching times of the primary side switches.

Herein, if I_out = 0, then Is1_av = -Is2_av and Ip1_av = -lp2_av.

In the above and in the figures, the term "av" refers to the currents averaged over time, as also denoted by the doted line in Fig. 5.

Furthermore, as can be taken from Fig. 5, the control unit 50 controls the flyback converters 2, 3 in a synchronized and interleaved manner.

As can be seen in Fig. 5, the control unit 50 drives the flyback converters 2, 3 such that a difference of the forward current Ip1(t), Is1(t), especially their averages Is1_av, Ip1_av, of the first flyback converter 2 and the reverse current Is2(t), Ip2(t), especially their averages Is2_av, Ip2_av, of the second flyback converter 3 is a value substantially equal to the leakage current of one or a net leakage current of the capacitors 101, 102. For instance, if a leakage current of the second capacitor 102 of I_R2(t) = 4 mA is assumed, then Ip1_av = 2 mA, and Ip2_av = - 2 mA, such that their difference, especially in addition an addition of their absolute values, is equal to the leakage current of 4 mA of the second capacitor 102.

Furthermore, as shown herein, the control unit 50 drives the flyback converters 2, 3 to balance their currents against each other at zero output current.

In view of the capacitor-balancing circuit 1 comprising preferably more than two flyback converters 2, 3, the other flyback converters (for example the third flyback converter 3 of Fig. 2), can be furthermore also driven to balance leakage currents and/or voltage imbalances of the capacitors 101 to 103 and to provide the target power.

With regard to Fig. 6, a second mode of operation will now be explained. Herein, it is again assumed that there is no output load, i.e. I_out = 0. Furthermore, it is assumed that the leakage current IR1(t) of the first capacitor 101 is equal to the leakage current IR2(t) of the second capacitor 102. Furthermore, it is assumed that transformer inductivities of the flyback converters 2, 3 are different from one another. In other words, the transformer inductivity of the first flyback converter 2 is different from the transformer inductivity of the second flyback converter 3, respectively their transformers 5.

As shown in Fig. 6, the synchronous rectifiers 9 allow a negative current at the secondary side, shown by phases in which Is1(t), Is2(t) < 0 . This negative current helps to discharge any switch capacity at the primary sides 5.1, which therefore leads to a voltage soft-switching. Herein, both flyback converters 2, 3 are driven by the control unit 50 in a synchronized and phase-shifted by 180° manner.

As can be taken from Fig. 6, each of the flyback converters 2, 3 is controlled to respectively produce alternating forward and reverse currents. Herein, in the operation mode of no target power, the forward current phase of forward current, for example positive phases of Is1, and a corresponding negative current phase of negative current, for example negative phases Is1, of the same flyback converter 2 or 3 are symmetrical. In other words, the currents produced by each of the flyback converters 2, 3 are respectively symmetrical with regard to forward and backward currents such that the current of each flyback converter 2 or 3 balances itself out.

Due to the assumed different transformer inductances of the two flyback converters 2, 3, respective slopes of the current are different between those of the first converter 2 and the second converter 3.

As can be taken from Fig. 6, in the present mode of operation, it is assumed that the transformer inductance of the first converter 2, i.e. the slope of primary side current Ip1(t) and of the secondary side current Is1(t), is smaller than the transformer inductivity of the second converter 3. A steeper current slope indicates a lower inductance.

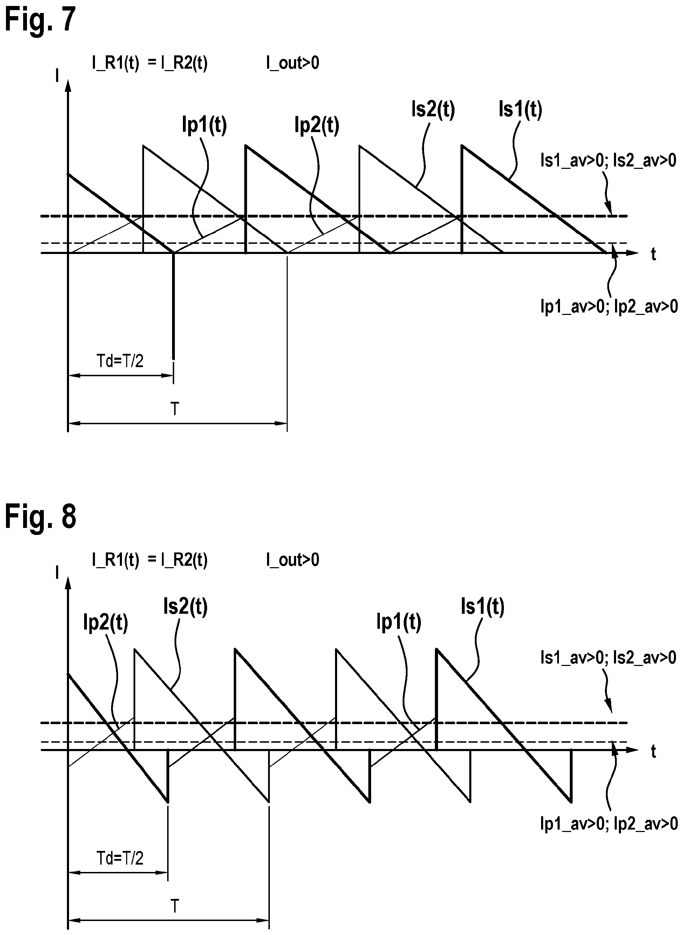

In view of Fig. 7, a third mode of operation will be explained. Herein, it is again assumed that the leakage current I_R1(t) of the first capacitor 101 is equal to the leakage current I_R2(t) of the second capacitor 102. Some output load R10 is present, such that I_out > 0. Furthermore, it is assumed that all components of both flyback converters 2, 3 are equal, especially with respect to their transformer inductivities.

As can be seen here, due to I_out > 0, the average currents Is1_av, Is2_av, Ip1_av, and Ip2_av are all respectively > 0.

As can be seen herein, the control unit 50 operates the flyback converters 2, 3 in interleaved manner. By providing secondary side currents Is1(t), Is2(t), which overlap in time, the capacitor-balancing circuit 1 reduces ripple at the output 7.

Now, with view on Fig. 8, a fourth mode of operation will be explained. In the present mode of operation, it is assumed that the leakage current I_R1(t) of the first capacitor 101 is equal to the leakage current I_R2(t) of the second capacitor 102. Furthermore, some output load R10 is present, such that I_out > 0. It is assumed that all components of both flyback converters 2, 3 are equal, especially with respect to their transformer inductivities.

As can be taken from Fig. 8, the synchronous rectifiers 9 allow for alternating forward and reverse currents, i.e. negative currents, at the secondary sides Is1(t) and Is2(t). Thereby, the switch capacity at the primary side 5.1 is discharged at the primary side.

As can be taken from a comparison of Fig. 8 and Fig. 6, in the present mode of operation, the transformer inductivity of the first flyback converter 2 is equal to the transformer inductivity of the second flyback converter 3. Therefore, the respective current slopes are equal between the two converters 2, 3. Furthermore, the currents are symmetric in the sense that the currents on the secondary sides Is1(t) and Is2(t) are symmetrical to each other (i.e. substantially identical and phase shifted), wherein in comparison to Fig. 6 the respective forward phases are not symmetrical to the respective negative phases.

In the mode of operation of Fig. 6, the leakage currents of the first and second capacitors 101, 102 are balanced essentially via the unbalanced secondary side currents between the first converter 2 and the second converter 3, namely Is1(t) versus Is2(t). These are symmetrical due to the lack of output load, i.e. I_out = 0.

In Fig. 8, the difference or addition of absolute values of the forward phases with the reverse phases of the secondary currents Is1(t), Is2(t) balance the leakage currents from the first and second capacitors 101, 102 as well as provide the output current I_out > 0.

Furthermore, due to discharging of the switch capacities at the primary sides 5.1, the control unit 50 of the present embodiment also performs voltage soft-switching of the primary side switches 8.

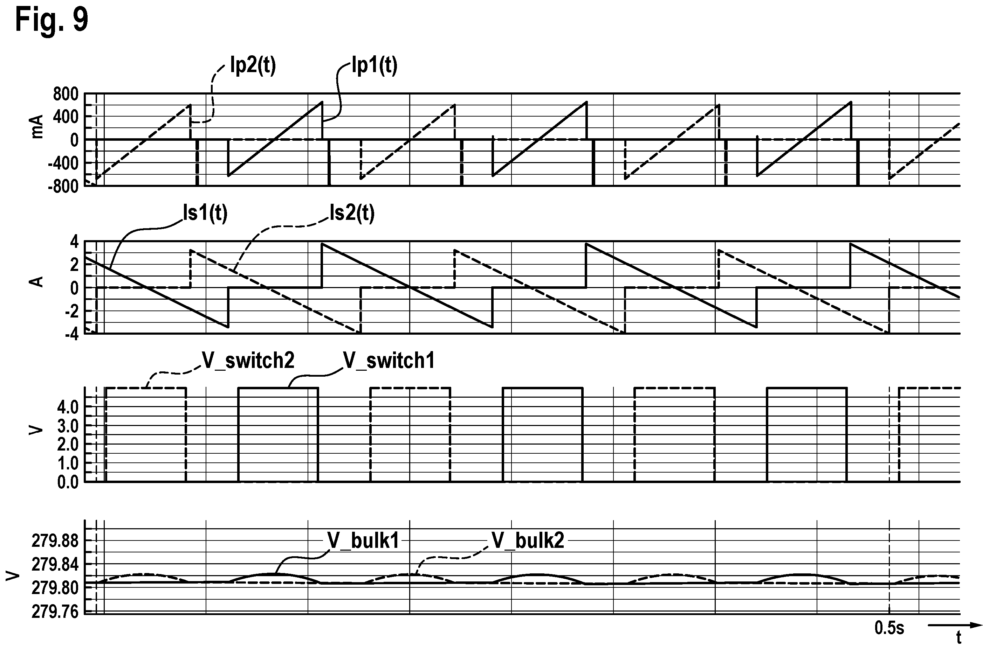

In Figs. 9 to 12, simulation results of different modes of operation are shown.

In Fig. 9, a mode of operation of zero output load I_out = 0, imbalance of leakage currents of the input capacitors 101, 102, and equal transformer inductivities is shown, essentially equal to the mode of operation of Fig. 5.

As can be taken from Fig. 9, average or mean values of secondary side currents Is1(t) and Is2(t) are nearly equal. The differences thereof in Fig. 9 stem from tolerances or inaccuracies of measurement, in particular of a curser measurement method.

Furthermore, in Fig. 9, the control via the control unit 50 of the primary side switches 8 is shown, wherein V_switch 1 is the voltage for the control of the primary side switch 8 of the first converter 2, and V-switch 2 is the voltage for the control of the primary side switch 8 of the second converter 3. Furthermore, V_bulk1 denotes the voltage of the first capacitor 101, and V_bulk2 denotes the voltage of the second capacitor 102.

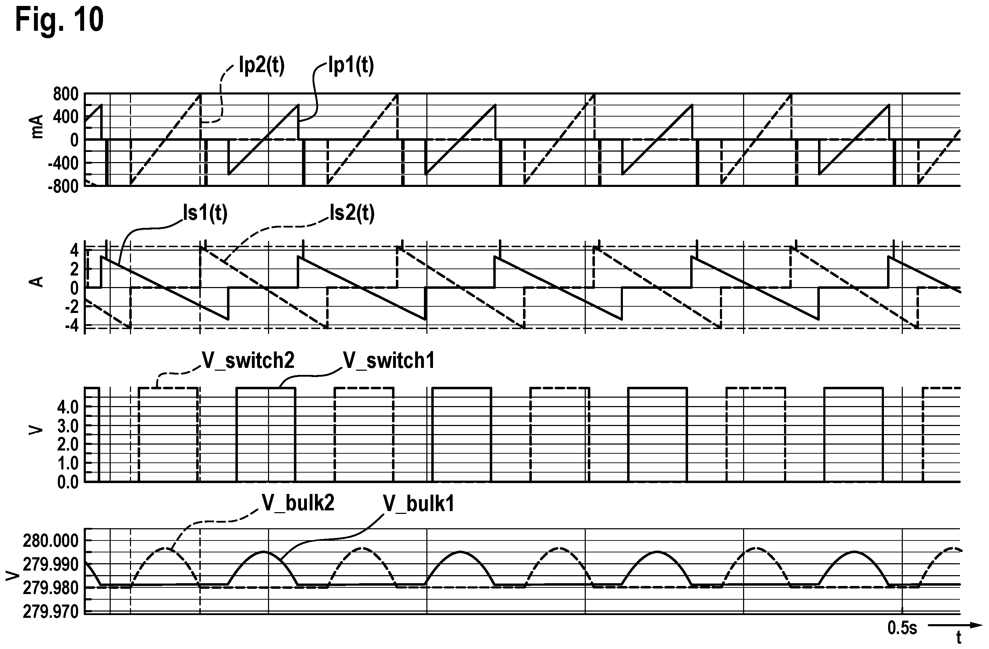

In Fig. 10, a mode of operation of zero output load I_out = 0, imbalance of transformer inductivities, and equal leakage currents of the first and second capacitors 101, 102 (I_R1(t) = I_R2(t)) is shown.

As can be taken from Fig. 10, at zero output load I_out = 0, imbalance of transformer inductivities, and equal leakage currents by the two capacitors 101, 102 slopes of transformer currents are different and thus also peak and valley currents thereof.

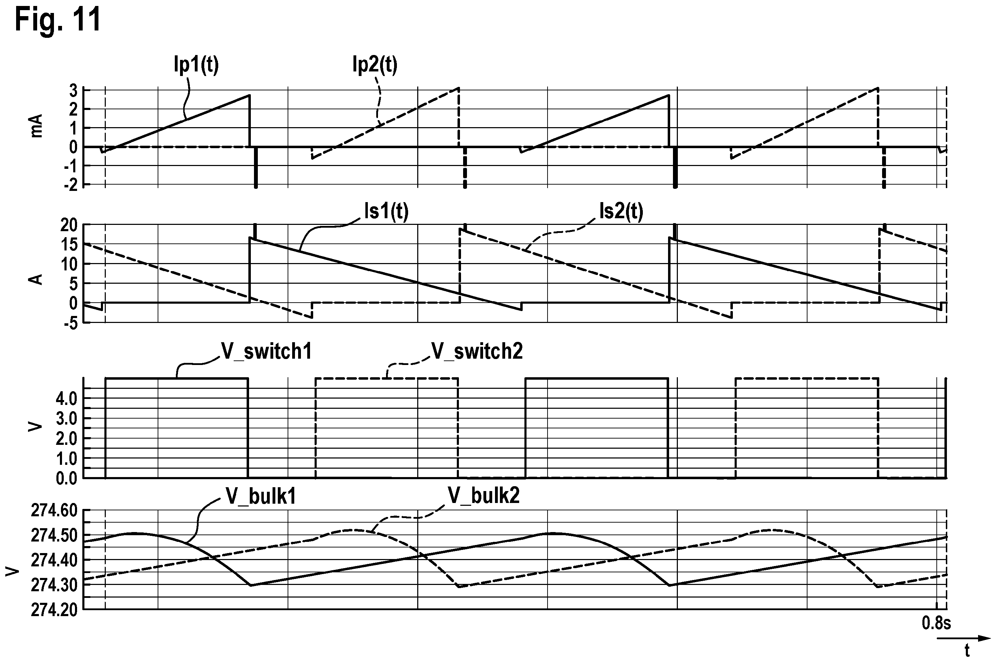

In Fig. 11, a simulation of a mode of operation at a full load, for example 24V/10A, imbalance of transformer inductivities, and equal leakage currents of the first and second capacitors 101, 102 is shown. As can be seen therein, voltage soft-switching at the primary side switches 8 is achieved via slightly negative valley currents at the secondary side Is1(t), Is2(t). In particular, in the present mode of operation, it is assumed that the second converter 3 has a lower inductivity, and thus also receives a lower minimum current (i.e. the most negative value).

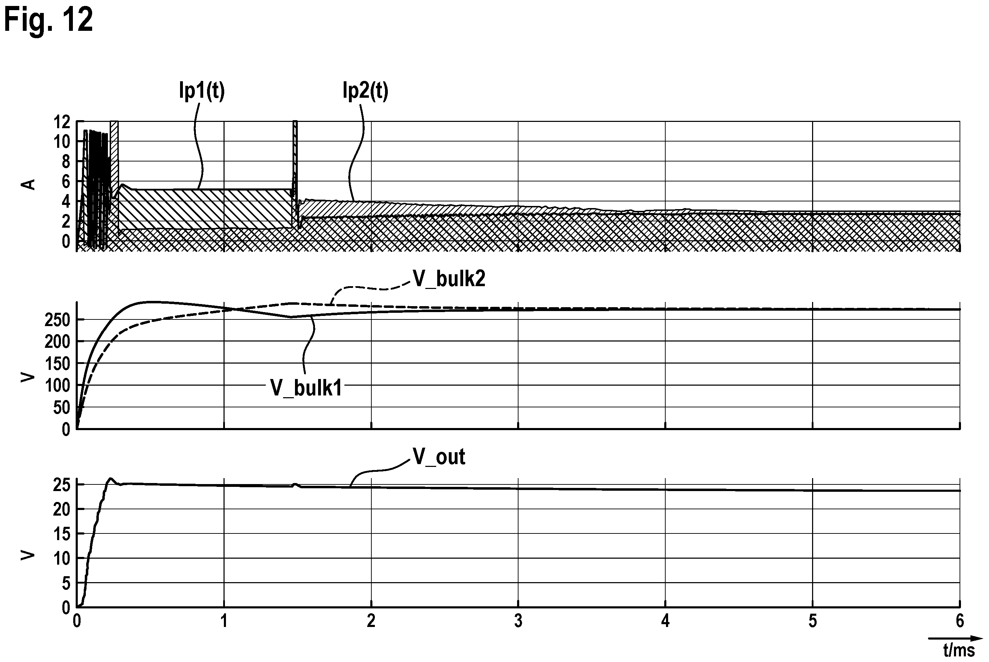

Fig. 12 shows a worst case operation mode as a stress-test. Herein, it is assumed that full load, for example 24V, 10A, 2.4 Ohm resistive load, V_in_total = 560 V(dc), R_source = 25 Ohm (NTC), the transformer inductivities are imbalances i.e. non-equal, the capacitors 101, 102 generate different leakage currents and comprise different capacitor values, for example 8µF and 12µF, as well as non soft-start (star-up ramp given by cycle-by-cycle peak limit).

As can be taken from Fig. 12, even under these conditions, the capacitor-balancing circuit 1 achieves balancing of the capacitor voltages V_bulk1 and V_bulk2 quickly after start-up. In particular, the capacitor-balancing circuit 1 achieves this while supplying a substantially stable target voltage V_out shortly after start-up.

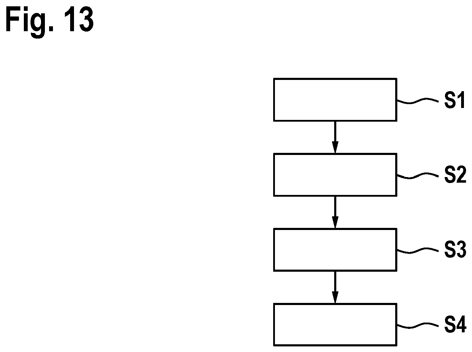

Fig. 13 shows a schematic block diagram depicting a method of operating the capacitor-balancing circuit 1 according to the present invention.

Herein, a hysteresis mode for every flyback-converter 2-4 is a preferred operation method of the capacitor-balancing circuit 1. Other control mechanisms like peak current mode with constant or variable switching frequency, boundary mode with variable switching frequency, continuous mode with constant or variable switching frequency or discontinuous mode with constant or variable switching frequency are also possible.

In the following, the hysteresis mode control method is explained.

Basic regulation concept for each flyback-converter 2-4:
The peak current at the primary side 5.1 is measured. The valley current at the secondary side 5.2 is measured. The valley current is preferably set to a negative value to enable a voltage soft-switching at the primary side switch 8. The output voltage and or the output current is measured. The output voltage is compared with a voltage setpoint. This difference is processed by a regulator of the control unit 50 that influences the peak current at the primary side 5.1. The higher the power demand, the higher the peak current. The switching frequency is, in this mode, a result of the output voltage, the output current, the input voltage and the transformer 5 inductivity.

In an operation method for two or more flyback-converters 2-4:
The input voltage of each flyback-converter 2 - 4 stage is measured in a first step (S1). Assuming that the input (capacitor 101 - 103) voltages are non-equal (but not limited thereto, see below), then the values are subtracted in a second step (S2) and the difference is processed in a third step (S3), for instance by a bulk voltage regulator of the control unit 50. The control signal of this regulator, i.e. of the control unit 50, controls, in a fourth step (S4), the peak currents of the flyback-converters 2 - 4.

The simplest configuration comprises two serial-connected capacitors 101, 102 and thus, two flyback convertors 2, 3 (as shown in for example Fig. 3).

Assuming that both capacitor 101, 102 voltages are regulated to become equal, then a simple summer (one input has a plus sign, the other one a minus sign for subtraction) is preferably used by or included in the control unit 50, and preferably no additional reference voltage is employed.

Thus, the difference of both bulk voltages is fed to a regulator, especially PI-T1 regulator. Other examples for a regulator can be a P-type or an I-type regulator.

If both bulk voltages are equal (V_bulk1 = V_bulk2), then the difference is zero. This means that the output of both regulator and T1 filter stage is also zero. Thus, the peak current limits of both flyback-converters 2, 3 are not influenced.

Assuming that V_bulk1 > V_bulk2 (or equivalently vice versa), then the output of both regulator and T1 filter is positive. This positive value is added to the peak current of the first flyback-converter 2 resulting in a higher level leading to a higher flyback-converter 2 input power. This higher power discharges the corresponding first bulk capacitor 101 such that V_bulk1 becomes smaller. The same -but with opposite sign- is done with the peak current of the second flyback-converter 3 such that the voltage of the second bulk capacitor 102 rises. Thus, regardless of their actual value, the bulk voltages are preferably always subtracted.

Preferable frequency synchronization and phase shift:
A phase lock loop (PLL) is used to synchronize all flyback-converters 2 - 4. The valley current of the secondary side 5.2 is manipulated to achieve the same switching frequency for all flyback-converters 2 - 4.

If an additional phase shift (e.g. 180° for two stages) is preferable, then the switching period of one flyback-converter 2/3/4 is measured and the switching cycles of the other flyback-converter(s) 4/3/2 is/are started with the delay of the phase shift.

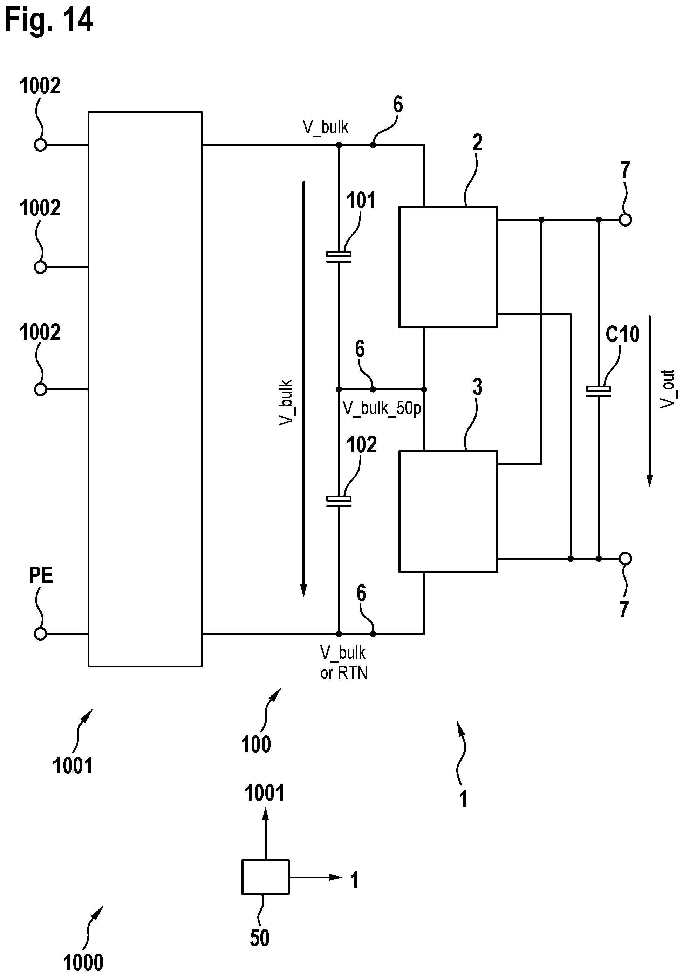

Fig. 14 shows a schematic circuit diagram of a converter apparatus according to the present invention.

As can be taken from Fig. 14, the converter apparatus 1000 of the present embodiment comprises the capacitor-balancing circuit 1 according to the first embodiment of the present invention. On the other hand, the converter apparatus 1000 can also comprise the capacitor-balancing circuit 1 according to the second embodiment shown in Fig. 2.

The converter apparatus 1000 of the present embodiment further comprises a boost PFC unit 1001, which may also be a passive PFC unit. The boost PFC unit 1001 of the present embodiment has its output connected to the multiple series-connected capacitors 101, 102, which in the present embodiment form the DC-link capacitors 101, 102 of the capacitor module 100.

The control unit 50 of the capacitor-balancing circuit 1 is connected to the boost PFC unit 1001 for control thereof. In particular, the control unit 50 controls the boost PFC unit 1001 so as to produce DC power from AC grid 1002.

The boost or passive PFC unit may comprise a three-phase input, an input EMI filter, a six-pulse bridge rectifier, an inrush current limiter, and a PFC choke.

Notably, the boost or passive PFC unit preferably comprises no stabilization, passive or active, for the DC-link capacitors 101, 102.

Thereby, the capacitor-balancing circuit 1 of the converter apparatus 1000 of the present embodiment constitutes a DC/DC converter. The converter apparatus 1000 of the present embodiment is thus an AC/DC conversion apparatus.

### List of Reference Numerals

- 1: Capacitor-balancing circuit
- 2: first bidirectional flyback converter
- 3: second bidirectional flyback converter
- 4: third bidirectional flyback converter
- 5: transformer
- 5.1 5.2: primary side secondary side
- 6: input connection
- 7: output connection
- 7.1: positive rail
- 7.2: negative or ground rail
- 8: primary side switch
- 9: synchronous rectifier
- 10: flyback or freewheeling diodes
- 50: control unit
- 51: sensor input
- 100: capacitor module
- 101-103: multiple series-connected capacitors
- 101: first series-connected capacitor
- 102: second series-connected capacitor
- 103: third series-connected capacitor
- 104: first midpoint
- 105: second midpoint
- 106: positive rail / top rail
- 107: negative or ground rail / bottom rail
- 1000: converter apparatus
- 1001: boost PFC unit
- 1002: grid
- C10: output capacitor
- C11, C12: smoothing capacitor
- I_out: output current flowing to the output connection
- Ip1(t), Ip2(t): current flowing through the primary sides
- I_R1(t), I_R2(t): leakage currents of the series-connected capacitors
- Is1(t), Is2(t): currents flowing through the secondary sides
- Np1, Np2: primary windings
- Ns1, Ns2: secondary windings

- R1, R2: capacitor voltage sensing / equivalent resistors
- R10: output load / equivalent resistor
- V_bulk: input voltage
- V_bulk1, V_bulk 2: capacitor voltages
- V_bulk_50p: voltage at midpoint
- V_out: output voltage to the output connection
- V_out+: positive rail of output connection
- V_out- or V_out_RTN: negative or ground rail of output connection
- V_switch 1: voltage for control of 8 of 2
- V-switch 2: voltage for control of 8 of 3
- S1: first step
- S2: second step
- S3: third step
- S4: fourth step

## Claims

1. Capacitor-balancing circuit (1) configured to balance voltages and/or leakage currents of a connectable capacitor module (100) comprising multiple series-connected capacitors (101-103), especially DC-link capacitors, the capacitor-balancing circuit (1) comprising:
multiple bidirectional flyback-converters (2-4); and
a control unit (50) configured to control the flyback-converters (2-4); wherein
the flyback-converters (2-4) respectively comprise a transformer (5) defining a primary side (5.1) and a secondary side (5.2) of the flyback-converters (2-4);
the primary sides (5.1) of the flyback-converters (2-4) are connected in series with one another and comprise an input connection (6) of the capacitor-balancing circuit (1) configured to be connectable to the capacitor module (100);
the secondary sides (5.2) of the flyback-converters (2-4) are connected in parallel with one another and comprise an output connection (7) of the capacitor-balancing circuit (1); and
the control unit (50) is configured to drive the flyback-converters (2-4) to output a target power of target voltage and/or target current to the output connection (7) and to balance voltages and/or leakage currents between multiple series-connected capacitors (101-103) in a connected state of the capacitor module (100).

2. Capacitor-balancing circuit (1) according to claim 1, wherein the control unit (50) is configured to drive the flyback-converters (2-4) to distribute voltages between the multiple-series connected capacitors (101-103) equally or individually as predetermined distribution values.

3. Capacitor-balancing circuit (1) according to any one of the foregoing claims, wherein the control unit (50) is configured to drive the flyback-converters (2-4) to balance voltages and/or leakage currents between the series-connected capacitors (101-103) at least in an operation mode of no target power.

4. Capacitor-balancing circuit (1) according to any one of the foregoing claims, wherein the control unit (50) is configured to at least temporarily drive at least one flyback-converter (2-4) to produce a reverse current, especially from a secondary side (5.2) to a primary side (5.1) of the at least one flyback-converter (2-4), opposite a forward current, especially from the primary side (5.1) to the secondary side (5.2), of at least one other flyback-converter (2-4).

5. Capacitor-balancing circuit (1) according to claim 4, wherein a difference of the reverse current and the forward current, especially an addition of their absolute values, supplied by the flyback-converters (2-4), especially averaged over time, is a value substantially equal to a leakage current of one or a net leakage current of multiple of the multiple series-connected capacitors (101-103).

6. Capacitor-balancing circuit (1) according to claim 4 or claim 5, comprising a total of two flyback-converters (2,3) and connected to two series-connected capacitors (101, 102), wherein in a case of one of the capacitors (101/102) producing leakage current, the control unit (50) is configured to control a first flyback-converter (2) to produce the forward current and a second flyback-converter (3) to produce the reverse current.

7. Capacitor-balancing circuit (1) according to claim 6 with claim 5 in the operation mode of no target power according to claim 3, wherein an addition of absolute values averaged over time of the forward current of the first flyback-converter (2) and the reverse current of the second flyback-converter (3) is substantially equal to the leakage current.

8. Capacitor-balancing circuit (1) according to claim 4 or claim 5, comprising a total of two flyback-converters (2, 3) and connected to two series-connected capacitors (101, 102), wherein in a case of both capacitors (101, 102) respectively producing leakage current, the control unit (50) is configured to control each of the two flyback-converters (2,3) to respectively produce alternating forward and reverse currents.

9. Capacitor-balancing circuit (1) according to claim 8 in the operation mode of no target power according to claim 3, wherein a forward current phase of forward current and a negative current phase of negative current of the same flyback-converter (2/3) are symmetrical.

10. Capacitor-balancing circuit (1) according to any one of the foregoing claims, wherein the control unit (50) is configured to control the flyback-converters (2-4) with, at least temporarily, differing respective duty cycles, wherein the control unit (50) is especially configured to regulate their common output voltage and/or common output current to the target power, and to regulate their input voltages to the same or a predetermined value.

11. Capacitor-balancing circuit (1) according to anyone of the foregoing claims, wherein the control unit (50) is configured to perform synchronized and interleaved control of the flyback-converters (2-4) at a predetermined phase shift, especially 180° for two flyback-converters (2, 3), especially 120° for three flyback-converters (2-4).

12. Capacitor-balancing circuit (1) according to any one of the foregoing claims, wherein the control unit (50) is configured to control the flyback-converters (2-4) with equal, especially fixed, switching frequency, and especially equal duty cycles.

13. Capacitor-balancing circuit (1) according to claim 12, wherein the control unit (50) is configured to control the duty cycles of the flyback-converters (2-4) based on target power of the flyback-converters (2-4).

14. Capacitor-balancing circuit (1) according to any one of claims 4 to 13, wherein the control unit (50) is configured to perform a voltage soft-switching operation by driving at least one flyback-converter (2/3/4) to produce the reverse current.

15. Converter apparatus (1000) comprising the capacitor-balancing circuit (1) according to any one of the foregoing claims, especially further comprising a boost PFC unit (1001) or a passive PFC unit connected with its output to the multiple series-connected capacitors (101-103) of the capacitor module (100), especially the DC-link capacitors of the capacitor module (100).
